Europäisches Patentamt

European Patent Office

Office européen des brevets

(19)

(11) **EP 0 918 404 A1**

(12) ## DEMANDE DE BREVET EUROPEEN

(43) Date de publication:
26.05.1999 Bulletin 1999/21

(51) Int. Cl.$^6$: **H04B 7/26**

(21) Numéro de dépôt: **99103179.0**

(22) Date de dépôt: **20.09.1996**

(84) Etats contractants désignés:
**AT BE CH DE DK ES FI GB IT LI NL SE**

(30) Priorité: **26.09.1995 FR 9511266**

(62) Numéro(s) de document de la (des) demande(s) initiale(s) en application de l'article 76 CBE:
**96402003.6 / 0 766 417**

(71) Demandeur: **ALCATEL CIT**
**75008 Paris (FR)**

(72) Inventeurs:
• **Dupuy, Pierre**
**75017 Paris (FR)**

• **Cherpantier, Corinne**
**92500 Rueil Malmaison (FR)**
• **Dobrosielski, Max**
**95800 Cergy St Christophe (FR)**

(74) Mandataire:
**El Manouni, Josiane et al**
**Compagnie Financiere Alcatel,**
**DPI,**
**30, avenue Kléber**
**75116 Paris (FR)**

Remarques:
Cette demande a été déposée le 18 - 02 - 1999 comme demande divisionnaire de la demande mentionnée sous le code INID 62.

(54) **Station de base pour système cellulaire de radiocommunications mobiles et système de synchronisation de telles stations de base**

(57)    Station de base pour système cellulaire de radiocommunications mobiles du type à accès multiple à répartition temporelle, et du type à partage de fréquences entre cellules d'un même motif de réutilisation, et à saut de fréquence tel que la fréquence utilisée à un instant dans une des cellules d'un motif de réutilisation soit différente de celles utilisées au même instant dans les autres cellules de ce motif, caractérisée en ce qu'elle comporte des moyens (C) pour commander l'émission de l'une des fréquences ainsi partagées, pendant une partie de trame de la structure temporelle définie pour l'accès multiple à répartition temporelle, et pour commander l'arrêt de toute émission pendant l'autre partie de trame, cette autre partie de trame ayant une durée au moins égale à l'erreur de synchronisation relative entre stations de base de ce système.

FIG. 2

EP 0 918 404 A1

## Description

La présente invention concerne les systèmes cellulaires de radiocommunications mobiles.

La présente invention est notamment applicable au cas de systèmes cellulaires de radiocommunications mobiles comportant des cellules de petite capacité (notamment des micro-cellules).

La présente invention s'applique ainsi notamment, dans un système à accès multiple à répartition temporelle tel que le système GSM par exemple, au cas de cellules de capacité limitée à huit canaux temporels, soit sept canaux dits canaux dédiés, plus un canal dit canal commun.

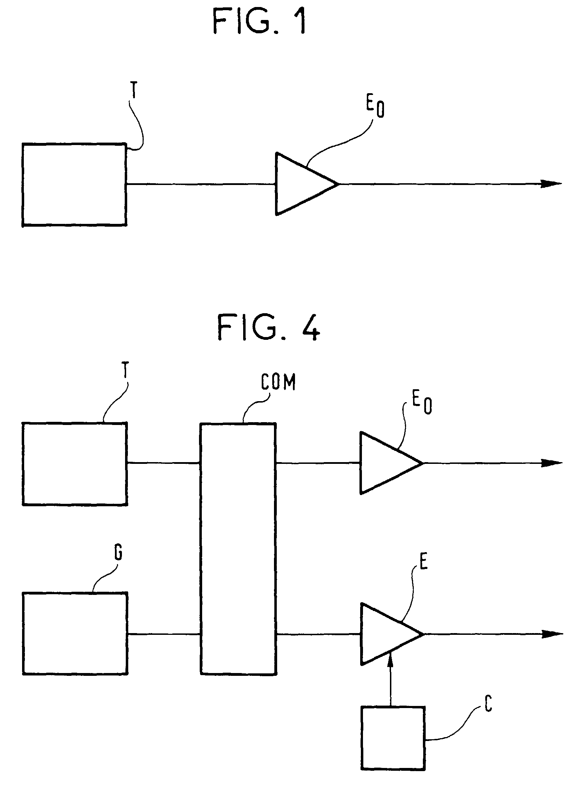

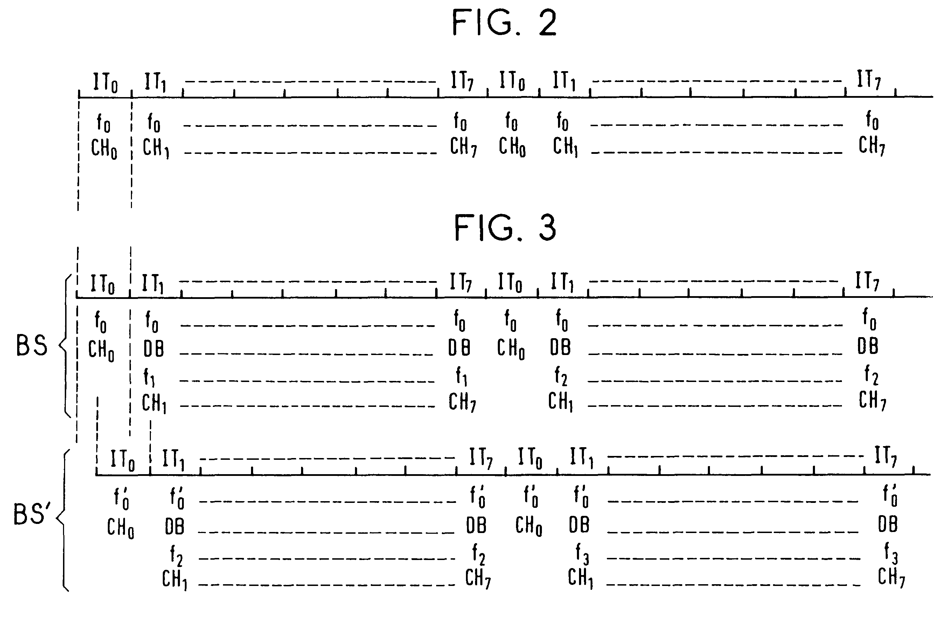

L'architecture d'une station fixe, ou station de base, pour une telle cellule dans le système GSM est rappelée sur la figure 1, et le principe d'émission par une telle station de base est rappelé sur la figure 2.

On rappelle que dans le cas du système GSM la structure temporelle définie pour l'accès multiple à répartition temporelle est composée de trames répétitives comportant chacune huit intervalles de temps notés $IT_O$ à $IT_7$.

On rappelle également que dans le cas du système GSM une station de base doit, outre des informations dites de trafic relatives auxdits canaux dédiés, émettre des informations dites de contrôle relatives audit canal commun sur un intervalle de temps de rang déterminé (en l'occurrence le premier intervalle de temps, $IT_O$) d'une structure de trame portée par une fréquence dite fréquence balise (ou aussi fréquence BCCH).

La station de base illustrée sur la figure 1 comporte ainsi un émetteur, $E_O$, de fréquence notée $f_O$ (constituant la fréquence balise, ou fréquence BCCH) recevant les informations à émettre sur les différents intervalles de temps de ladite structure temporelle, ces informations étant issues de moyens dits de traitement en bande de base (codage et mise au format de transmission du système GSM), notés T.

Ces informations comportent en l'occurrence :

- des informations formant un canal commun, noté $CH_O$, porté, comme rappelé sur la figure 2, par l'intervalle de temps $IT_O$,
- des informations formant des canaux dédiés, notés CH1 à CH7, portés respectivement, comme rappelé sur la figure 2, par les intervalles de temps $IT_1$ à $IT_7$.

Il est par ailleurs connu, dans les systèmes de radiocommunications mobiles, d'utiliser la technique dite de saut de fréquence, qui permet notamment d'améliorer la qualité de transmission en présence de phénomène d'évanouissement (ou "fading").

Cette technique nécessite cependant un minimum de ressources spectrales; par exemple elle n'est pas applicable aux stations de base du type rappelé sur la figure 1, puisque de telles stations de base ne disposent que d'une seule fréquence porteuse.

Il est cependant connu, du document WO 91/13502, de mettre en commun des fréquences allouées à différentes cellules d'un même motif de réutilisation d'un système cellulaire, pour effectuer un saut de fréquence tel que la fréquence utilisée au cours d'un intervalle de temps dans une cellule de ce motif de réutilisation soit différente de celles utilisées au cours du même intervalle de temps dans les autres cellules de ce motif de réutilisation.

Dans ce document, il est supposé, afin d'éviter tout risque d'interférence, qu'aucun chevauchement susceptible de générer de telles interférences ne se produit.

La présente demande se place au contraire dans le cas où une telle supposition ne peut être faite, c'est-à-dire dans le cas où les différentes stations de base du système ne peuvent être parfaitement synchrones les unes des autres, et vise néanmoins à éviter un tel risque d'interférence.

La présente invention a ainsi pour objet une station de base pour système cellulaire de radiocommunications mobiles du type à accès multiple à répartition temporelle, et du type à partage de fréquences entre cellules d'un même motif de réutilisation, et à saut de fréquence tel que la fréquence utilisée à un instant dans une des cellules d'un motif de réutilisation soit différente de celles utilisées au même instant dans les autres cellules de ce motif de réutilisation, et cette station de base étant essentiellement caractérisée en ce qu'elle comporte des moyens pour commander l'émission de l'une des fréquences ainsi partagées, pendant une partie de trame de la structure temporelle définie pour l'accès multiple à répartition temporelle, et pour commander l'arrêt de toute émission pendant l'autre partie de trame, cette autre partie de trame ayant une durée au moins égale à l'erreur de synchronisation relative entre stations de base de ce système.

Un autre but de la présente invention consiste à résoudre le problème précédemment énoncé en modifiant en outre le moins possible l'architecture des stations de base par rapport à leur architecture actuelle telle que rappelée sur la figure 1, et sans perte de capacité par rapport à cette architecture actuelle.

Ainsi, suivant une autre caractéristique de l'invention, ladite partie de trame de durée au moins égale à l'erreur de synchronisation relative entre stations de base est constituée par le premier intervalle de temps (ITo) de cette trame.

Par ailleurs, dans l'exemple d'application au système GSM mentionné ci-dessus, où ladite partie de trame de durée au moins égale à l'erreur de synchronisation relative entre stations de base est constituée par le premier intervalle de temps (ITo) de cette trame, un certain synchronisme entre stations de base du système est cependant nécessaire, par exemple une erreur de synchronisation maximale égale à un demi-intervalle de temps pourrait être tolérée.

Une méthode de synchronisation de stations de base pour réseau cellulaire de radiocommunications mobiles dans lequel les horloges de ces stations de base ont des fréquences égales mais des phases relatives quelconques est connue du document EP-0 626 769. Suivant cette méthode :

- différentes stations de base reçoivent, d'un centre de commutation, et par différentes liaisons filaires, un même signal de référence temporelle,
- l'une de ces stations de base est une station de base dite de référence, les autres étant dites stations de base subordonnées,
- chaque station de base subordonnée écoute une station mobile en communication avec la station de base de référence,
- chaque station de base subordonnée détecte un décalage entre le signal de référence temporelle tel que reçu du centre de commutation et le signal reçu de la station mobile, et effectue une correction pour compenser ce décalage temporel et donc se synchroniser sur la station de base de référence.

Une telle méthode a notamment pour inconvénient de nécessiter l'écoute, par les stations de base subordonnées, de stations mobiles qui ne sont pas en communication avec elles.

La présente invention a également pour but d'éviter ces inconvénients.

La présente invention a ainsi également pour objet un système de synchronisation temporelle de stations de base pour réseau cellulaire de radiocommunications mobiles, système dans lequel les horloges de ces stations de base ont des fréquences égales mais des phases relatives quelconques, système comportant des moyens permettant à une station de base dite station de base de référence d'imposer sa référence temporelle à une autre station de base, dite station de base subordonnée, en vue de compenser la différence de phase entre ces deux stations, et ce système étant essentiellement caractérisé en ce que ces moyens comportent :

- des moyens permettant à une station mobile d'écouter ladite station de base de référence et ladite station de base subordonnée,
- des moyens permettant d'en déduire, vu de cette station mobile, le décalage temporel $D_1$ entre ces deux stations de base,
- des moyens permettant, à l'occasion d'un changement de cellule impliquant ladite station de base de référence et ladite station de base subordonnée, de déterminer la différence $D_2$ de temps de propagation entre la station mobile et chacune de ces stations de base,
- des moyens pour déterminer, à partir des valeurs D1 et D2, le décalage temporel à corriger pour que ladite station de base subordonnée soit synchronisée sur ladite station de base de référence.

D'autres objets et caractéristiques de la présente invention apparaîtront à la lecture de la description suivante d'un exemple de réalisation, cette description étant faite, à titre d'exemple, pour le cas d'application précité au système GSM, et cette description étant faite en relation avec les dessins ci-annexés dans lesquels :

- la figure 1 décrite plus haut, rappelle l'architecture connue précitée d'une station de base,
- la figure 2 rappelle le principe d'émission d'une station de base suivant la figure 1,
- la figure 3 illustre le principe d'émission de stations de base suivant l'invention,
- la figure 4 est un schéma général d'une station de base suivant l'invention,
- la figure 5 rappelle l'architecture générale d'un système cellulaire de radiocommunications mobiles tel que le système GSM par exemple,
- la figure 6 est un schéma destiné à illustrer les moyens mis en oeuvre dans une station mobile, dans un exemple de réalisation d'un système de synchronisation de stations de base suivant l'invention,
- la figure 7 est un schéma destiné à illustrer les moyens mis en oeuvre dans une station de base dite subordonnée, dans un exemple de réalisation d'un système de synchronisation de stations de base suivant l'invention.

Sur la figure 3 est illustré le principe d'émission, suivant l'invention, par des stations de base situées dans un même motif de réutilisation, à titre d'exemple deux stations de base, notées BS et BS'.

Pour chacune de ces stations de base on a illustré la structure temporelle utilisée pour l'émission par cette station de base. On a ainsi illustré, à titre d'exemple, comme sur la figure 1, les intervalles de temps $IT_o$ à $IT_7$ de deux trames consécutives.

On notera que les stations de base BS et BS' ne sont pas parfaitement synchrones l'une de l'autre, et que l'erreur de synchronisation relative est en l'occurrence de l'ordre d'un demi-intervalle de temps.

Pour chacune de ces stations de base on a en outre indiqué la fréquence balise sur laquelle émet cette station de base, en l'occurrence $f_o$ pour la station de base BS et $f'_o$ pour la station de base BS'.

Le canal commun $CH_o$ relatif à chaque station de base est, comme illustré sur la figure 3, émis pendant les intervalles de temps $IT_o$ sur la fréquence balise de cette station de base, et des informations dites de bourrage, ou "dummy bursts", notées DB, sont émises pendant les intervalles de temps $IT_1$ à $IT_7$ sur la fréquence balise de chaque station de base.

Pour chacune de ces stations de base on a en outre indiqué, sur la figure 3, la fréquence d'émission, par cette station de base, des canaux dédiés CH1 à CH7.

En l'occurrence, pour chaque station de base, la fréquence d'émission des canaux dédiés, choisie parmi l'ensemble des fréquences partagées entre les différentes cellules du motif de réutilisation considéré, change de trame en trame, et pour chaque trame reste inchangée pendant les intervalles de temps $IT_1$ à $IT_7$, aucune émission n'étant par ailleurs réalisée pendant les intervalles de temps $IT_o$.

A titre d'exemple, la fréquence d'émission change, de l'une à l'autre des deux trames illustrées, de $f_1$ à $f_2$ pour la station de base BS, et de $f_2$ à $f_3$ pour la station de base BS'.

Le fait que les deux stations de base considérées ne soient pas parfaitement synchrones l'une par rapport à l'autre n'est pas ici générateur d'interférence, comme cela aurait pu être le cas pour la fréquence $f_2$ dans l'exemple illustré, puisqu'aucune émission n'est réalisée pendant l'intervalle de temps $IT_o$.

Par ailleurs, il n'y a pas de perte de capacité pour les stations de base par rapport au cas illustré sur la figure 1 puisque l'intervalle de temps $IT_o$ est de toutes façons perdu pour le trafic.

En outre les modifications à apporter par rapport à l'architecture illustrée sur la figure 1 sont réduites puisque les moyens de traitement en bande de base T peuvent être conservés tels quels.

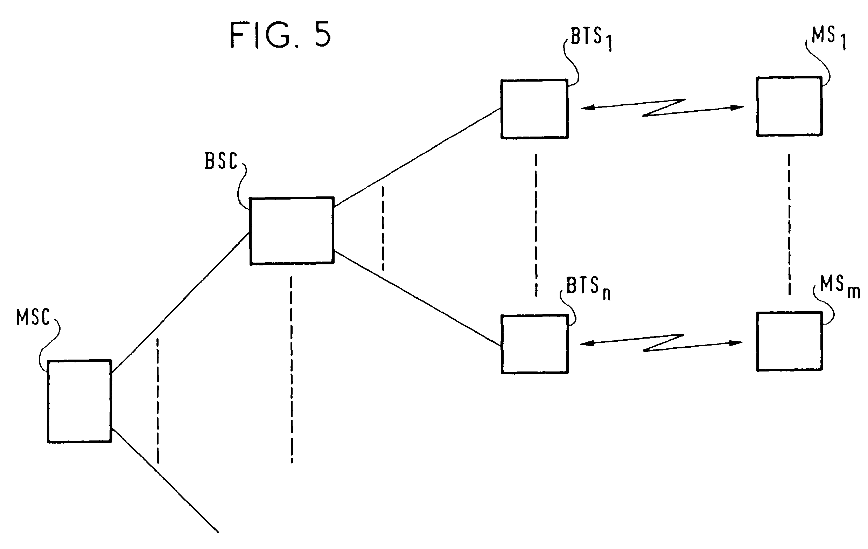

Un exemple d'architecture d'une station de base suivant l'invention est illustré sur la figure 4.

Cette station de base comporte, par rapport à celle illustrée sur la figure 1, des moyens d'émission supplémentaires qui, dans l'exemple illustré, sont constitués par un émetteur E commandé par des moyens de commande C.

La commande de l'émetteur E générée par les moyens de commmande C inclut, dans l'exemple considéré, une commande d'arrêt d'émission pendant les intervalles de temps $IT_o$ de la structure de trame, comme expliqué en relation avec la figure 3. Plus généralement, pour obtenir le but recherché, à savoir éviter les interférences, cette commande d'arrêt d'émission s'effectuerait pendant une durée au moins égale à l'erreur de synchronisation relative entre stations de base du système considéré.

Des moyens, notés G, pour générer des informations de bourrage, ou "dummy bursts", à émettre pendant les intervalles de temps $IT_1$ à $IT_7$ de la structure de trame portée par la fréquence balise sont en outre prévus.

Les informations issues d'une part des moyens de traitement en bande de base T et d'autre part des moyens G pour générer des informations de bourrage sont aiguillées vers les émetteurs $E_o$ et E par l'intermédiaire de moyens de commutation notés COM, commandés de façon à réaliser une émission suivant le principe décrit plus haut et illustré sur la figure 3.

Bien que la description qui précède corresponde plus particulièrement, à titre d'exemple, au cas de cellules de capacité limitée à huit canaux temporels (soit sept canaux dédiés, plus un canal commun) l'invention n'est pas cependant limitée à une telle application.

On décrit maintenant un exemple de réalisation d'un système de synchronisation de stations de base suivant l'invention, et, avant cela, on rappelle, en relation avec la figure 5, l'architecture générale d'un système cellulaire de radiocommunications mobiles tel que le système GSM par exemple.

Chaque cellule est équipée d'une station émettrice-réceptrice dite station de base, telle que $BTS_1$ à $BTS_n$.

Chaque station de base est susceptible d'être reliée par une liaison radio à une station mobile, telle que $MS_1$ à $MS_m$, pour permettre une communication intéressant cette station mobile.

Un ensemble de stations de base telles que $BTS_1$ à $BTS_n$ est par ailleurs relié, par des liaisons filaires, à un contrôleur de stations de base, tel que BSC, et de même un ensemble de contrôleurs de stations de base tels que BSC est relié à un centre de commutation MSC, l'ensemble formé par les MSC et BSC assurant la gestion de ces communications, notamment la gestion de la signalisation s'y rapportant.

Les stations de base sont rendues plésiochrones, par l'intermédiaire du centre de commutation MSC relié au réseau téléphonique filaire. Les horloges de ces stations de base ont donc des fréquences égales mais des phases relatives quelconques.

Des moyens sont en outre prévus pour permettre à une station de base dite de référence d'imposer sa référence temporelle à une autre station de base, dite station de base subordonnée, en vue de compenser cette différence de phase.

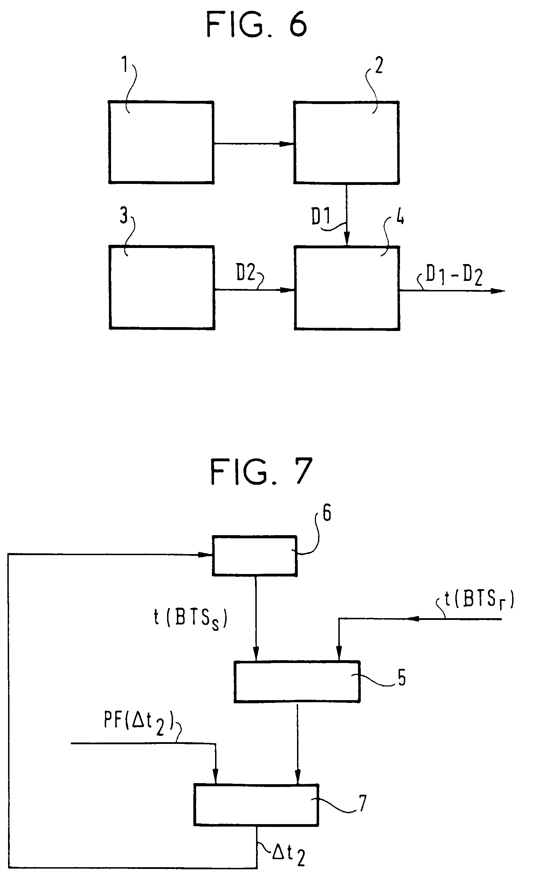

Suivant l'invention, ces moyens comportent, comme illustré sur la figure 6 :

- des moyens, 1, permettant à une station mobile d'écouter ladite station de base de référence et ladite station de base subordonnée,
- des moyens, 2, permettant d'en déduire, vu de cette station mobile, le décalage temporel $D_1$ entre ces deux stations de base,
- des moyens, 3, permettant, à l'occasion d'un changement de cellule impliquant ladite station de base de référence et ladite station de base subordonnée, de déterminer la différence $D_2$ de temps de propagation entre la station mobile et chacune de ces stations de base,
- des moyens, 4, pour déterminer, à partir des valeurs $D_1$ et $D_2$, le décalage à corriger pour que la station de base subordonnée soit synchronisée sur la station de base de référence.

Les moyens 1 permettant à une station mobile d'écouter une station de base (qu'elle soit de référence ou subordonnée) sont des moyens classiquement prévus dans un système tel que le système GSM par exemple pour permettre à cette station mobile de se synchroniser sur cette station de base. Les moyens 1 sont donc des moyens couramment prévus dans une station mobile et ne seront donc pas redécrits ici.

Par exemple, si le mobile est en communication avec l'une ou l'autre de ces stations de base, par exemple la station de base de référence, (auquel cas la station mobile est synchronisée sur cette station de base) il écoute l'autre station de base, en l'occurrence la station de base subordonnée, pour se pré-synchroniser sur celle-ci en vue d'un éventuel changement de cellule (ou "handover").

Il est alors possible de déterminer, dans la station mobile, en l'occurrence dans les moyens 2, le décalage temporel $D_1$ entre ces deux stations de base. La réalisation de ces moyens 2 ne posant pas de problème particulier pour l'homme du métier, on n'entrera pas ici plus dans le détail de réalisation de ces moyens.

Ce décalage temporel D1 est cependant un décalage temporel vu du mobile, et il est donc nécessaire de le corriger de la différence $D_2$ de temps de propagation entre le mobile et chacune de ces stations de base.

Or cette différence de temps de propagation est généralement calculée, dans les systèmes de radiocommunications mobiles, tels que le système GSM, du type à accès multiple par répartition temporelle, à l'occasion d'une procédure de changement de cellule (ou handover), pour déterminer la façon dont doit être modifiée l'avance temporelle (ou "timing advance") appliquée au mobile dans ce type de système. Les moyens 3 sont donc également des moyens couramment prévus dans une station mobile, et ne seront donc pas redécrits ici.

Connaissant les décalages $D_1$ et $D_2$ on détermine alors, dans des moyens soustracteurs 4, la différence $D_1 - D_2$ qui constitue le décalage à corriger pour que la station de base subordonnée soit synchronisée sur la station de base de référence.

La différence D1-D2 est par exemple élaborée dans la station mobile. Cette différence pourrait être transmise telle quelle par la station mobile à la station de base subordonnée.

Cependant, pour éviter de consommer trop de ressources de transmission sur l'interface air entre la station mobile et la station de base subordonnée, une variante de réalisation est maintenant décrite, en relation avec la figure 7, dans laquelle la station mobile ne transmet à la station de base subordonnée, notée BTSs, que la partie fractionnaire de cette différence, ce qui en pratique dans un système tel que le système GSM, ne nécessite qu'un seul message de signalisation, noté M1, au lieu de plusieurs.

Suivant cette variante, la station de base de référence, notée BTSr, transmet par ailleurs à la station de base subordonnée BTSs, à un instant t, dans un message noté $M_2$, l'heure locale de la station BTSr, notée t(BTSr).

Ce message M2 arrive à la station de base subordonnée BTSs à un instant noté t(BTSs) tel que :

$$t(BTSs) = t(BTSr) + \Delta t_1 + \Delta t_2$$

où $\Delta t_1$ désigne le temps de transmission entre les stations BTSr et BTSs, et où $\Delta t2$ représente le décalage D1-D2 à corriger pour que la station de base BTSs soit synchronisée sur la station de base BTSr.

Par exemple, si l'on suppose que :

$$t(BTS_r) = 200.1 \text{ s}$$

$$\Delta t_1 = 0.6 \text{ s}$$

$$\Delta t_2 = 150.8 \text{ s}$$

alors :

$$t(BTS_s) = 200.1 + 0.6 + 150.8 = 351.5 \text{ s}$$

La station de base BTSs en déduit, grâce à des moyens soustracteurs 5 recevant d'une part le contenu t(BTSr) du message M2, et d'autre part l'heure locale t(BTSs) de la station de base BTSs, délivrée par une horloge 6, qu'elle avance, dans l'exemple considéré, d'environ 351.5-200.1=151.4s par rapport à la station de base BTSr.

En outre, la station mobile indique à la station de base BTSs, dans un message M1, la partie fractionnaire de $\Delta t_2$, notée PF($\Delta t_2$) à savoir, dans l'exemple considéré, 0.8s.

Si l'on peut par ailleurs supposer (ce qui est le cas dans un système tel que le système GSM) que le temps de transmission $\Delta t_1$ est inférieur ou égal à 0.9 s, alors la station de base BTSs en déduit, grâce à des moyens de calcul 7, la valeur $\Delta t_2$, égale au plus grand nombre se terminant par 0.8 et inférieur à 151.4, en l'occurrence 150.8 s.

Cette valeur $\Delta t_2$ est appliquée à une entrée de commande de l'horloge 6, ce qui permet de synchroniser la station de base BTSs sur la station de base BTSr. Ainsi, dans l'exemple considéré, la station de base BTSs retarde son horloge de 150.8 s.

On notera que bien que la synchronisation de stations de base suivant l'invention soit avantageusement réalisée au moyen d'un tel système de synchronisation, cette synchronisation pourrait également être réalisée avec un système de synchronisation autre, ou éventuellement ne pas être nécessaire.

## Revendications

1. Système de synchronisation temporelle de stations de base pour système cellulaire de radiocommunications mobiles, dans lequel les horloges des stations de base ont des fréquences égales mais des phases relatives quelconques, système comportant des moyens permettant à une station de base dite de référence d'imposer sa référence temporelle à une autre station de base, dite station de base subordonnée, en vue de compenser la différence de phase entre ces deux stations, système caractérisé en ce que ces moyens comportent :

- des moyens (1) permettant à une station mobile d'écouter ladite station de base de référence et ladite station de base subordonnée,
- des moyens (2) permettant d'en déduire, vu de cette station mobile, le décalage temporel $D_1$ entre ces deux stations de base,
- des moyens (3) permettant, à l'occasion d'un changement de cellule impliquant ladite station de base de référence et ladite station de base subordonnée, de déterminer la différence $D_2$ de temps de propagation entre la station mobile et chacune de ces stations de base,
- des moyens (4) pour déterminer, à partir des valeurs $D_1$ et $D_2$, le décalage temporel à corriger pour que ladite station de base subordonnée soit synchronisée sur ladite station de base de référence.

2. Système de synchronisation temporelle de stations de base selon la revendication 1, caractérisé en ce que ledit décalage temporel étant déterminé dans la station mobile, et ledit changement de cellule étant un changement de la cellule ayant pour station de base la station de base de référence vers la cellule ayant pour station de base la station de base subordonnée, ce système comporte :

- des moyens pour transmettre, de la station mobile vers la station de base subordonnée, un message de signalisation contenant la partie fractionnaire ($PF(\Delta t_2)$) de ce décalage temporel,
- des moyens pour transmettre, de la station de base de référence (BTSr) vers la station de base subordonnée (BTSs) un message contenant l'heure locale ($t(BTSr)$) de la station de base de référence,
- des moyens (5, 7) pour calculer, dans la station de base subordonnée, ledit décalage temporel à partir du contenu des messages ainsi reçus et de l'heure locale de la station de base subordonnée.

3. Station mobile pour système de synchronisation selon la revendication 1, caractérisé en ce que les différents moyens énoncés dans cette revendication sont prévus dans cette station mobile.

4. Station mobile pour système de synchronisation selon la revendication 2, caractérisé en ce qu'elle comporte des moyens pour transmettre à une station de base subordonnée (BTSs) un message de signalisation contenant la partie fractionnaire ($PF(\Delta t_2)$) dudit décalage temporel.

5. Station de base de référence, pour système de synchronisation selon la revendication 2, caractérisé en ce qu'elle comporte des moyens pour transmettre à une station de base subordonnée un message contenant son heure locale ($t(BTSr)$).

6. Station de base subordonnée, pour système de synchronisation selon la revendication 2, caractérisé en ce que le sdits moyens (5, 7) pour calculer ledit décalage temporel à partir du contenu desdits messages et de l'heure locale ($t(BTSs)$) de cette station de base sont prévus dans cette station de base.

# FIG. 1

# FIG. 4

FIG. 2

FIG. 3

FIG. 5

# FIG. 6

# FIG. 7

**Office européen des brevets**

**RAPPORT DE RECHERCHE EUROPEENNE**

Numéro de la demande

EP 99 10 3179

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP 0 626 769 A (NEC) 30 novembre 1994<br>* revendications 1-12 * | 1-6 | H04B7/26 |
| A | EP 0 629 056 A (ALCATEL MOBILE COMMUNICATION FRANCE) 14 décembre 1994<br>* colonne 3, ligne 52 - colonne 9, ligne 16 * | 1-6 | |
| A | WO 86 06571 A (PROCESS AUTOMATION &COMPUTER SYSTEMS LTD.) 6 novembre 1986<br>* revendication 1; figure 2 * | 1-6 | |
| A | EP 0 645 903 A (ALCATEL MOBILE COMMUNICATION FRANCE) 29 mars 1995<br>* revendications 1-11 * | 1-6 | |
| A | WO 94 18764 A (WIRELESS COMMUNICATIONS PRODUCTS LIMITED) 18 août 1994<br>* page 6, ligne 19 - page 7, ligne 32 * | 1-6 | |
| A | WO 94 10768 A (TELIA) 11 mai 1994<br>* page 3, ligne 22 - page 5, ligne 3 * | 1-6 | DOMAINES TECHNIQUES RECHERCHES (Int.Cl.6)<br><br>H04B<br>H04Q |
| A | WO 95 02306 A (NOKIA TELECOMMUNICATIONS OY) 19 janvier 1995<br>* page 2, ligne 23 - page 3, ligne 22; figure 3 * | 1-6 | |

Le présent rapport a été établi pour toutes les revendications

| Lieu de la recherche | Date d'achèvement de la recherche | Examinateur |
|---|---|---|
| LA HAYE | 17 mars 1999 | Bischof, J-L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.    EP 99 10 3179

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-1999

| Document brevet cité au rapport de recherche | | Date de publication | Membre(s) de la famille de brevet(s) | | Date de publication |
|---|---|---|---|---|---|
| EP 626769 | A | 30-11-1994 | JP | 6338847 A | 06-12-1994 |
| | | | JP | 2526803 B | 21-08-1996 |
| | | | JP | 7154849 A | 16-06-1995 |
| | | | US | 5519710 A | 21-05-1996 |
| EP 629056 | A | 14-12-1994 | FR | 2706708 A | 23-12-1994 |
| | | | AU | 674069 B | 05-12-1996 |
| | | | AU | 6339494 A | 15-12-1994 |
| | | | CN | 1107627 A | 30-08-1995 |
| | | | FI | 942704 A | 10-12-1994 |
| | | | US | 5546384 A | 13-08-1996 |
| WO 8606571 | A | 06-11-1986 | AU | 594057 B | 01-03-1990 |
| | | | AU | 5812386 A | 18-11-1986 |
| | | | EP | 0259315 A | 16-03-1988 |
| | | | JP | 62502651 T | 08-10-1987 |
| | | | US | 4887266 A | 12-12-1989 |
| EP 645903 | A | 29-03-1995 | FR | 2710805 A | 07-04-1995 |
| | | | AT | 173367 T | 15-11-1998 |
| | | | AU | 685151 B | 15-01-1998 |
| | | | AU | 7421394 A | 13-04-1995 |
| | | | CA | 2133139 A | 30-03-1995 |
| | | | DE | 69414514 D | 17-12-1998 |
| | | | ES | 2123737 T | 16-01-1999 |
| | | | FI | 944445 A | 30-03-1995 |
| | | | JP | 7170580 A | 04-07-1995 |
| | | | US | 5583870 A | 10-12-1996 |
| WO 9418764 | A | 18-08-1994 | AU | 6007594 A | 29-08-1994 |
| | | | EP | 0683944 A | 29-11-1995 |
| WO 9410768 | A | 11-05-1994 | SE | 470037 B | 25-10-1993 |
| | | | AU | 676226 B | 06-03-1997 |
| | | | AU | 5379794 A | 24-05-1994 |
| | | | CA | 2145998 A | 11-05-1994 |
| | | | CN | 1101188 A | 05-04-1995 |
| | | | EP | 0667069 A | 16-08-1995 |
| | | | JP | 8502866 T | 26-03-1996 |
| | | | SE | 9203137 A | 25-10-1993 |
| | | | US | 5809426 A | 15-09-1998 |
| WO 9502306 | A | 19-01-1995 | FI | 933091 A | 06-01-1995 |
| | | | AU | 684801 B | 08-01-1998 |
| | | | AU | 7125494 A | 06-02-1995 |
| | | | CN | 1126538 A | 10-07-1996 |

EPO FORM P0460

Pour tout renseignement concernant cette annexe : voir Journal Officiel de l'Office européen des brevets, No.12/82

ANNEXE AU RAPPORT DE RECHERCHE EUROPEENNE
RELATIF A LA DEMANDE DE BREVET EUROPEEN NO.

EP 99 10 3179

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-03-1999

| Document brevet cité au rapport de recherche | Date de publication | Membre(s) de la famille de brevet(s) | | Date de publication |
|---|---|---|---|---|
| WO 9502306 A | | EP | 0707778 A | 24-04-1996 |
| | | JP | 9504413 T | 28-04-1997 |
| | | NO | 960038 A | 04-03-1996 |
| | | US | 5668804 A | 16-09-1997 |

Pour tout renseignement concernant cette annexe : voir Journal Officiel de l'Office européen des brevets, No.12/82